# FASCICULE DE BREVET EUROPEEN

(11) **EP 2 160 815 B1**
(45) Date de publication et mention de la délivrance du brevet: **04.03.2015**
(21) Numéro de dépôt: 08805681.7
(22) Date de dépôt: 22.04.2008
(51) Int. Cl.: H02K 21/04

(54) **ENSEMBLE INTERPOLAIRE POUR MACHINE ELECTRIQUE TOURNANTE**
ZWISCHENPFOSTENANORDNUNG FÜR EINE ELEKTRISCHE ROTATIONSMASCHINE
INTERPOLE ASSEMBLY FOR ROTATING ELECTRICAL MACHINE

(30) Priorité: 27.06.2007 FR 0756058
(43) Date de publication de la demande: 10.03.2010
(73) Titulaire: Valeo Equipements Electriques Moteur, 94046 Créteil Cedex (FR)
(72) Inventeur: PFLEGER, Alexandre, F-93160 Noisy Le Grand (FR); GAS, Olivier, F-75017 Paris (FR); MIPO, Jean-Claude, F-94000 Creteil (FR); BOUARROUDJ, Lilya, F-75013 Paris (FR)
(74) Mandataire: de Lambilly Delorme, Marie Pierre
(86) Numéro de dépôt international: PCT/FR2008/050723
(87) Numéro de publication internationale: WO 2009/000981

(56) Documents cités:
- EP-A- 0 991 162
- EP-A- 1 643 615
- FR-A- 2 793 085
- FR-A- 2 798 786
- US-A1- 2004 032 183

## Description

La présente invention concerne de manière générale les machines électriques tournantes.

Plus précisément, l'invention concerne des machines tournantes de type alternateur ou alterno-démarreur, mises en oeuvre dans les véhicules automobiles.

Et plus précisément encore, l'invention concerne les machines tournantes dont le rotor comprend des aimants, par exemple des aimants permanents comme des aimants en terres rares, ainsi qu'un ou plusieurs bobinages d'excitation.

Le rotor a une structure à griffes comprenant des parties aimantées, et un bobinage d'excitation annulaire placé autour de l'arbre de rotation de la machine. Le rotor est constitué de deux roues polaires comprenant chacune des griffes dont chacune s'insère entre deux griffes de la roue polaire opposée.

Les aimants disposés entre deux griffes servent à empêcher les fuites du flux magnétique entre les pôles magnétiques en forme de griffe. On peut placer des aimants entre chaque griffe ou entre certaines griffes seulement.

Les aimants sont placés entre les griffes de chaque roue polaire soit par des agrafes, soit grâce à deux rainures réalisées sur un des bords latéraux des griffes entre lesquelles l'aimant est situé.

Dans le premier cas, les aimants ont tendance à bouger à cause de la force centrifuge, car les agrafes ne garantissent pas une fixation optimum.

Dans le deuxième cas, les aimants doivent remplir tout l'espace interpolaire, ce qui augmente le coût de la machine car ces aimants sont chers.

Le but de l'invention est de proposer un rotor avec des aimants interpolaires à la fois de taille réduite et fixés dans les rainures latérales des griffes. C'est-à-dire en utilisant les rainures réalisées habituellement par fraisage standard, et donc sans modifier le procédé de fabrication habituel du rotor à aimant.

Le document EP 1643 615 décrit une machine électrique pour véhicule comprenant un rotor comprenant une pluralité de pôles, une pluralité d'aimants et une pluralité d'éléments de maintien.

Le document EP0991162 décrit un alternateur pour véhicule comprenant deux pièces polaires présentant des pôles entrelacés et au moins un aimant.

Le rotor selon l'invention, est un rotor de machine électrique tournante qui comporte deux roues polaires comportant une série de griffes axiales de forme globalement trapézoïdale qui s'étendent axialement depuis le bord d'extrémité radiale externe de la dite roue polaire, en direction de l'autre roue polaire, de manière que chaque griffe d'une roue polaire est située dans l'espace existant entre deux griffes consécutives de l'autre roue polaire, et qu'au moins un espace interpolaire comporte un ensemble magnétique; il est caractérisé en ce qu'au moins un desdits ensembles est composé à la fois d'au moins un élément en matière magnétique qui constitue une pièce, par exemple une matière identique à celle des pôles et d'au moins un aimant, et qui est reçu en partie dans une gorge réalisée dans chacune des faces latérales en vis-à-vis desdites deux griffes adjacentes. Ceci présente l'avantage d'augmenter la section de passage du flux rotorique vers le stator mais également de pouvoir utiliser la même fraise et donc le même procédé de fabrication que celui déjà utilisé pour réaliser les rainures dans les faces latérales des griffes et l'insertion des aimants classiques. L'élément en matière magnétique complète l'espace entre l'aimant et la rainure, puisqu'il remplace une partie de l'aimant de l'art antérieur pour que l'ensemble constitué par l'aimant et l'élément en matière magnétique soit de volume égal audit aimant de l'art antérieur et ainsi remplir l'espace entre les rainures interpolaires. L'élément magnétique peut être aussi appelé cale.

Selon une caractéristique particulière, l'aimant a une largeur comprise entre 18 et 22 fois la dimension de l'entrefer. Ainsi par exemple pour un entrefer de 0,325mm, la largeur de l'aimant devra être comprise entre 5,85 et 6,5mm. L'entrefer est la distance entre le rotor et le stator.

De façon préférée, l'aimant a une largeur de 20 fois l'entrefer. Soit pour un entrefer de 0,325mm une largeur de 6,5mm.

Selon une autre caractéristique, la matière de l'élément magnétique est de l'acier. L'acier est de préférence de l'acier doux qui offre une meilleure conduction du flux des éléments magnétiques. Les pôles pourront également être réalisés en acier.

Selon une autre caractéristique, l'aimant est en matière terres rares, comme des aimants NeFeB, ou de type ferrite.

Selon une première variante, l'aimant est placé au milieu des deux griffes qui constituent les deux pôles. La position centrale de l'aimant dans l'ensemble magnétique permet d'avoir un ensemble plus équilibré magnétiquement.

Selon une deuxième variante, l'aimant est placé contre une des griffes qui constituent des pôles. Ceci permet de contrer les fuites interpolaires, la polarité de l'aimant sera déterminée en fonction de la polarité des pôles adjacents.

Selon une troisième variante, il y a deux aimants. On peut ainsi les répartir symétriquement dans l'espace interpolaire.

Selon un premier mode de réalisation, l'élément magnétique a un profil en forme de T. Dans ce cas l'aimant se compose de deux bouts identiques de forme sensiblement rectangulaire qui sont placés de part et d'autre de la jambe du T. L'aimant est maintenu par son aimantation sur l'élément magnétique. Il est possible d'ajouter une cale si nécessaire de façon connue.

Selon un deuxième mode de réalisation, l'élément magnétique a un profil en forme de U. L'aimant est dans ce cas placé entre les deux branches du U. L'aimant est maintenu par son aimantation sur l'élément magnétique. Il est possible d'ajouter une cale si nécessaire de façon connue.

Selon un troisième mode de réalisation, l'élément magnétique a un profil en forme de S. L'aimant se compose de deux bouts taillés de telle façon qu'ils remplissent les deux cotés du S. L'aimant est maintenu par son aimantation sur l'élément magnétique. Il est possible d'ajouter une cale si nécessaire de façon connue.

Selon un quatrième mode de réalisation, l'élément magnétique a un profil en forme de π. L'élément en forme de π est réalisé de telle façon que ses jambes soient légèrement évasées et que la base de chaque jambe soit plus étroite ou avec un léger décrochement de façon à ce qu'elles puissent s'écarter ou se rapprocher pour avoir un effet ressort. L'aimant se compose de deux bouts identiques est sont placés de part et d'autre des deux jambes du π.

Selon un cinquième mode de réalisation, l'élément magnétique a un profil en forme de H. Dans ce cas le principe est le même que pour la forme en T sauf que dans ce cas, il y a une deuxième barre en bas du T.

Dans tous les cas précédents l'élément en forme de T, de U, de S, de π ou de H peut être réalisé par extrusion.

Selon un cinquième mode de réalisation, l'élément magnétique est réalisé à partir d'une tôle pliée en accordéon. L'élément est ainsi réalisé à partir d'une tôle plane qui est ensuite pliée en accordéon, il présente ainsi une certaine élasticité permettant d'encaisser les déformation des griffes et donc de diminuer les contraintes mécaniques dans les éléments magnétiques.

Selon une caractéristique particulière, l'élément magnétique présente des perçages latéraux. Ces perçages favorisent le passage du vernis entre les griffes et le collage de l'ensemble.

Selon une autre caractéristique, la surface supérieure, destinée à être placée vers l'extérieur du rotor, est striée. Ces stries améliorent le rendement de l'alternateur en réduisant les pertes par courant de Foucault qui se développent sur la surface des griffes.

Selon une caractéristique particulière, un des cotés de la surface supérieure a au moins deux bords arrondis. Cette forme facilite l'insertion automatique de l'ensemble interpolaire dans le procédé de fabrication. Les bords peuvent également être biseautés.

Le rotor selon l'invention est utilisé dans un alternateur ou un alterno-démarreur.

De façon symétrique il est possible d'inverser les rôles des éléments magnétiques et des aimants, c'est-à-dire par exemple d'utiliser un aimant en T et des éléments de matière identique aux pôles de part et d'autre de la jambe du T. De la même façon, la configuration de l'ensemble magnétique pourra être constitué avec l'élément en T ou en U ou en S disposé de façon horizontal ou vertical.

L'invention sera mieux comprise à la lecture de la description qui va suivre donnée uniquement à titre d'exemple et faite en se référant aux dessins annexés dans lesquels :
- la figure 1 est une vue en perspective d'un rotor selon l'invention où une partie de la roue polaire supérieure est enlevé pour une meilleure vision,
- la figure 2 est une vue en perspective d'une roue polaire avec une paire d'ensembles selon l'invention,
- la figure 3 est une vue de coté du rotor selon un premier mode de réalisation,
- la figure 4 est une vue de coté du rotor selon un deuxième mode de réalisation,
- la figure 5 est une vue en perspective de l'ensemble magnétique selon une première, variante,
- la figure 6 est une vue en perspective du montage de l'élément magnétique de la figure 5,
- la figure 7 est une vue en perspective de l'ensemble magnétique selon une seconde variante,
- la figure 8 est une vue en perspective de l'ensemble magnétique selon une troisième version,
- la figure 9 est une vue en perspective de l'élément magnétique selon une quatrième version,
- la figure 10 est une vue en coupe de l'ensemble magnétique comprenant l'élément magnétique de la figure 9 monté,
- la figure 11 est une vue en perspective de l'ensemble magnétique selon une cinquième version,
- la figure 12 est une vue en perspective de l'élément magnétique selon une variante particulière,
- la figure 13 est une vue en perspective de l'élément magnétique selon une autre variante,
- la figure 14 est une vue en perspective de l'ensemble magnétique selon une réalisation particulière.

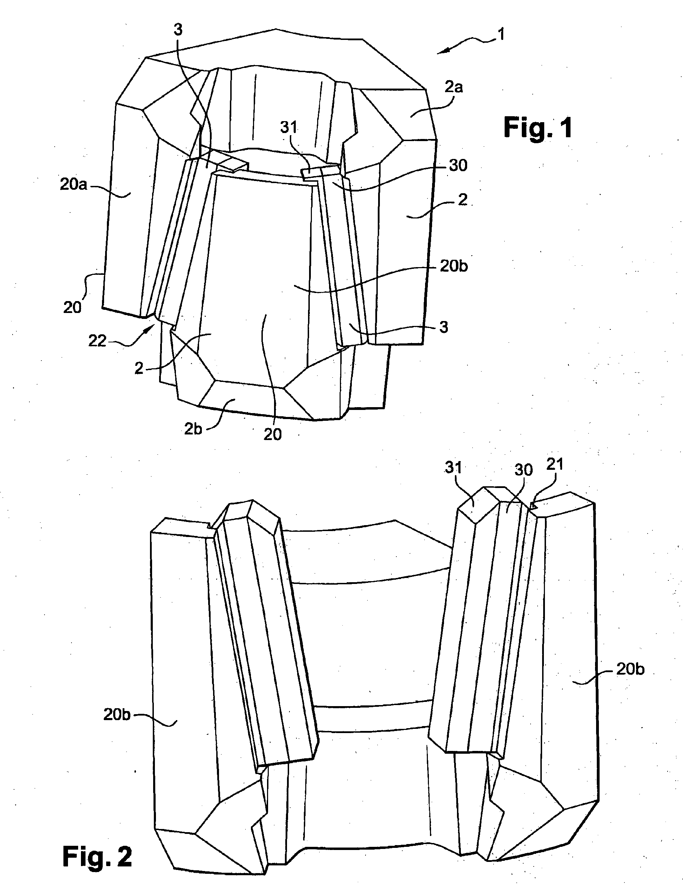

Le rotor 1 de la figure 1 est composé de deux roues polaires 2 ayant chacune plusieurs griffes 20. La roue polaire supérieure 2a comporte les griffes 20a et la roue polaire inférieure 2b comprend les griffes 20b, si on considère le haut de la figure 1 comme le haut et le bas de la figure comme le bas. Un ensemble magnétique 3 comprenant un aimant 30 et un élément magnétique 31, qui peut être de même matière de les roues polaires 2, est placé entre deux griffes 20a (du haut) et 20b (du bas).

Des rainures 21 sont réalisées sur les cotés des griffes 20a et 20b entre lesquelles est situé l'ensemble magnétique 3, comme visible sur la figure 2.

Ces rainures 21 sont réalisées de façon classique avec une fraise dont la tête a, par exemple, une largeur 9,5 mm pour un entrefer de 0,325 mm. Dans l'exemple représenté aux figures 1 et 2, la largeur nécessaire de l'aimant 30 est alors de 6,5 mm, la différence est donc remplie par deux éléments magnétiques 31 de 1,5 mm.

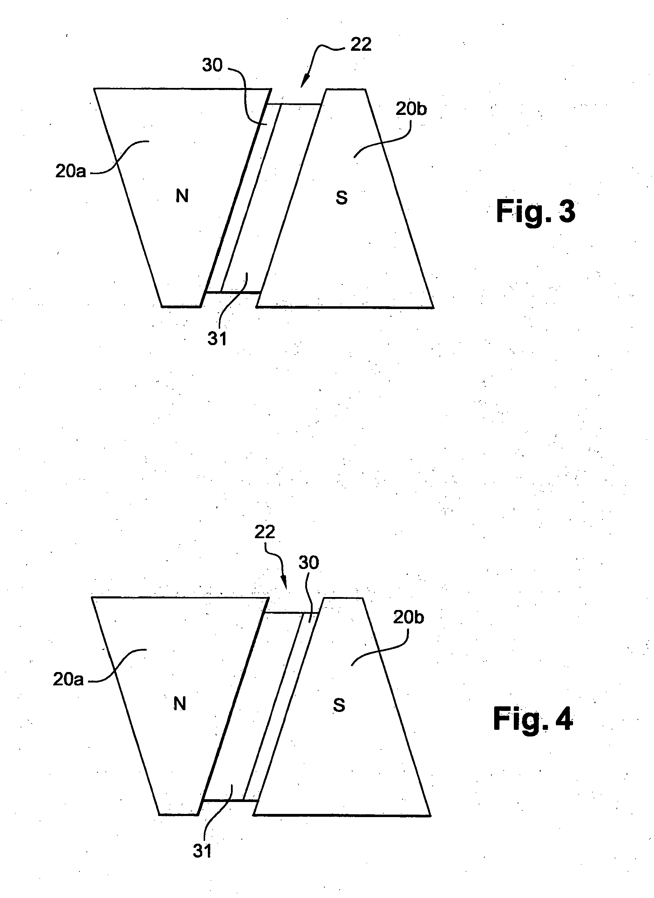

Comme visible aux figures 3 et 4, il est aussi possible de n'avoir qu'un seul aimant 30 et un seul élément magnétique 31, dans ce cas l'aimant 30 est placé contre la griffe 20a (ici, un pôle nord) de la roue polaire supérieure 2a et l'élément magnétique 31 est placé contre la griffe 20b (ici, un pôle sud) de la roue polaire inférieure 2b (cf. figure 3). A la figure 4, au contraire l'aimant 30 est placé contre la griffe 20b (ici, un pôle sud) de la roue polaire inférieure 2b et l'élément magnétique 31 est placé contre la griffe 20a (ici, un pôle nord) de la roue polaire supérieure 2a.

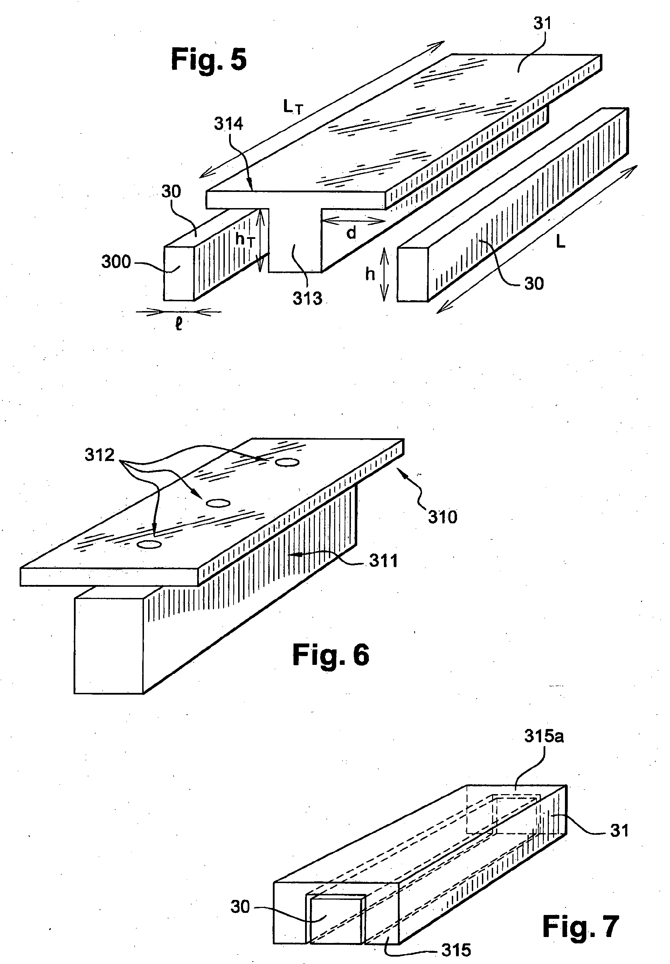

Dans le mode de réalisation de l'élément magnétique 31 représenté à la figure 5, l'élément magnétique 31 a un profil en forme de T. Ce T est réalisé à partir d'une feuille 310 en matériau magnétique et une baguette 311 de même matière et de section carrée ou rectangulaire, par exemple, qui sont soudées ensembles par des points de soudures 312 (figure 6). Ces pièces 310 et 311 peuvent également être soudées en continu par laser ou par résistance ou toute autre moyen approprié.

Les aimants 30 représentés à la figure 5 ont des bouts 300 dont la largeur I est égale à la distance d entre la jambe 313 de l'élément magnétique 31 en T et l'extrémité de la barre 314 du T de façon que chaque bout 300 ne dépasse pas du T. La longueur L des bouts est sensiblement égale à la longueur L_{T} de l'élément en T. La hauteur h de chaque bout 300 est égale à la hauteur h_{T} de la jambe du T. L'ensemble magnétique 3 a ainsi un aspect homogène avec des faces sensiblement planes. Les aimants 30 et les éléments magnétiques 31 en T tiennent ensemble soit par aimantation, soit par collage si les aimants 30 ne sont pas aimantés. Les aimants 30 sont maintenus dans la zone interpolaire par les rainures 21 et l'élément magnétique 31 en T par les extrémités des barres 314 du T.

Dans la variante représentée à la figure 7, l'élément magnétique 31 a un profil en U, l'aimant 30 est placé entre les deux branches 315 du U et l'élément de liaison 315a du U, sa taille est telle qu'il ne dépasse pas desdites branches 315 du U, l'ensemble magnétique 3 présente ainsi une surface sensiblement plane.

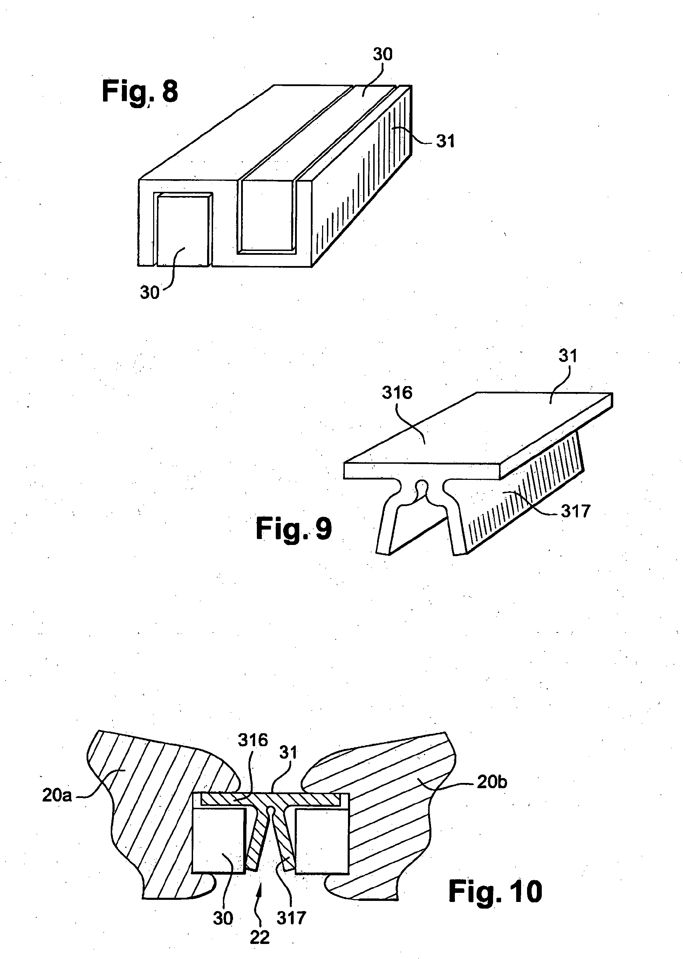

La figure 8 montre une troisième forme de réalisation où l'élément magnétique 31 est en forme de S. Les aimants 30 sont placés dans chacun des plis du S. Les aimants 30 sont de longueur sensiblement identique à la longueur de l'élément en S, le profil de l'aimant 30 est tel que l'ensemble magnétique 3 présente des faces sensiblement rectilignes. La hauteur des aimants 30 est sensiblement identique à la hauteur des plis du S.

Selon un quatrième mode de réalisation visible aux figures 9 et 10, l'élément magnétique 31 a un profil en forme de π. La partie supérieure 316 du π est reliée aux deux pieds 317 du π de façon à ce que les deux pieds 317 présentent une certaine élasticité latérale. Chaque coté du π, en vis-à-vis d'une griffe 20 d'une des roue polaire 2 est placé un aimant 30 qui est plaqués contre la griffe 20 correspondante par l'effet ressort d'un des deux pieds 317. La longueur de chaque aimant 30 est sensiblement égale à la longueur de l'élément magnétique 31 profilé en π.

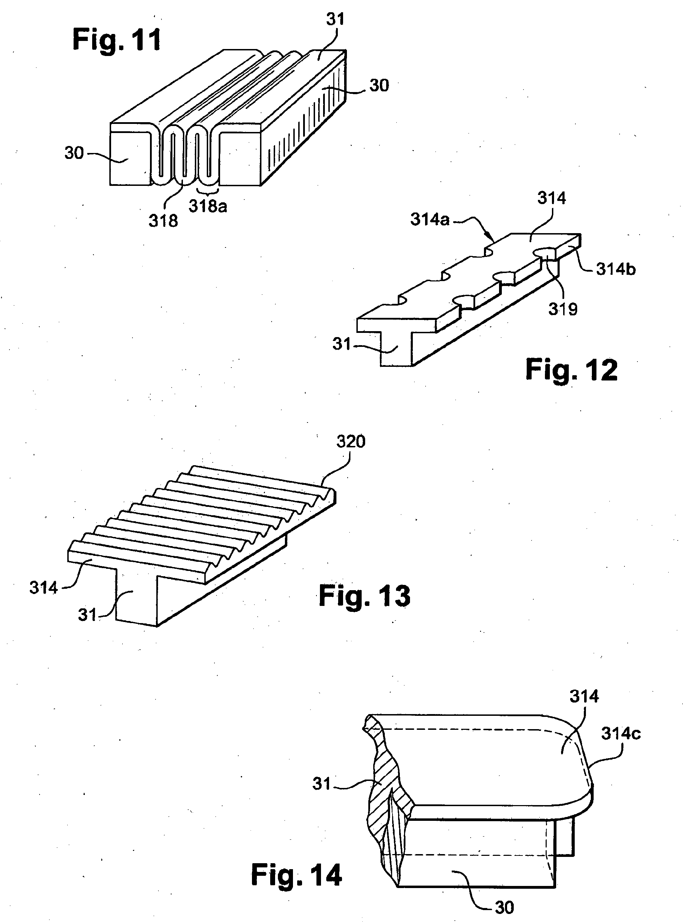

Le cinquième mode de réalisation de la figure 11 montre un élément magnétique 31 partiellement en accordéon avec deux aimants 30 situés de part et d'autre de la partie en accordéon 318. L'élément magnétique 31 est réalisé à partir d'une tôle pliée plusieurs fois et dont l'épaisseur peut être de 0,5 mm, par exemple. La partie en accordéon 318 peut présenter un ou plusieurs plis 318a. Ces plis 318a donne une certaine souplesse à l'élément magnétique 31 ce qui lui autorise une certaine élasticité qui permet d'encaisser les déformations des griffes 20 dues notamment aux tolérances de fabrication. L'élasticité des plis 318a facilite le placage des aimants 30 dans les rainures 21 des griffes 20.

La figure 12 illustre une variante où les bords 314a et 314b de la partie supérieure 314 de l'élément magnétique 31 sont percés en 319 afin dé favoriser le passage du vernis entre les griffes 20 et l'élément magnétique 31. Cette variante peut être appliquée à toutes les formes d'élément magnétique 31 présentant des bords rectilignes.

La pièce 31 de la figure 13, présente des stries 320 sur le dessus de sa partie supérieure 314. Ces stries peuvent être appliquées à toutes les formes de d'élément magnétique 31 présentant une surface supérieure plane et peuvent également être cumulées aux perçages 319 de la variante précédente.

Le montage de l'ensemble 3 dans les rainures 21 pourra être facilité en arrondissant une des extrémités 314c de la partie supérieure 314 de l'élément magnétique 31 (cf figure 14). Si l'élément magnétique 31 présente également une partie inférieure, de la même façon cette partie inférieure pourra être arrondie. Cet arrondi peut être réalisé quelque soit la forme de l'élément magnétique 31, il pourra éventuellement être nécessaire d'arrondir l'aimant 30. Ainsi l'insertion des ensembles 3 pourra être faite de façon automatisée. Les extrémités 314c pourront être biseautées au lieu d'arrondies.

Nous allons maintenant décrire le montage des ensembles 3 dans les zones interpolaires 22 des griffes 20 de l'alternateur ou de l'alterno-démarreur. On réalise un usinage des griffes 20 dans la zone interpolaire 22 par une fraise classique afin de réaliser une rainure 21 de chaque coté de la zone interpolaire 22.

Le montage de l'ensemble 3 peut être réalisé par l'aimantation du ou des aimants 30 sur l'élément magnétique 31, ou par leur collage, ou encore le ou les aimants 30 sont monté(s) non aimantés avec l'élément magnétique 31 pour constituer l'ensemble 3 qui est éventuellement aimanté ensuite. Cette dernière solution présente l'avantage de manipuler des éléments magnétiques 30 non aimantés pendant l'assemblage, il n'y a plus les contraintes liées aux matériaux aimantés. Puis on insère l'ensemble 3 entre les rainures 21. Cette insertion peut plus facilement être réalisée de façon automatique si un des bouts 314 de l'ensemble 3 est arrondi ou biseauté.

## Revendications

1. Rotor (1) de machine électrique tournante qui comporte deux roues polaires (2) comportant une série de griffes axiales (20) de forme globalement trapézoïdale qui s'étendent axialement depuis le bord d'extrémité radiale externe de la dite roue polaire (2a), en direction de l'autre roue polaire (2b), de manière que chaque griffe (20a, 20b) d'une roue polaire (2a, 2b) est située dans l'espace existant entre deux griffes consécutives (20a, 20b) de l'autre roue polaire (2b, 2a), qu'au moins un espace interpolaire (22) comporte un ensemble magnétique (3), et qu'au moins un desdits ensembles (3) est composé d'au moins un aimant (30), ledit ensemble étant reçu dans une gorge (21) réalisée dans chacune des faces latérales en vis-à-vis de deux griffes adjacentes (20a, 20b) et **caractérisé en ce que** ledit ensemble est composé en outre d'au moins une pièce (31) en matière magnétique.

2. Rotor de machine électrique tournante selon la revendication 1, **caractérisé en ce que** l'aimant (30) a une largeur comprise entre 18 et 22 fois la dimension de l'entrefer.

3. Rotor de machine électrique tournante selon une des revendications précédentes, **caractérisé en ce que** la matière de la pièce magnétique (31) est de l'acier.

4. Rotor de machine électrique tournante selon une des revendications précédentes, **caractérisé en ce que** l'aimant (30) est en matière terres rares.

5. Rotor de machine électrique tournante selon une des revendications 1 à 5, **caractérisé en ce que** l'aimant (30) est placé au milieu de deux griffes (20a, 20b).

6. Rotor de machine électrique tournante selon une des revendications précédentes, **caractérisé en ce que** l'aimant (30) est placé contre une des griffes (20a, 20b).

7. Rotor de machine électrique tournante selon une des revendications précédentes, **caractérisé en ce qu**'il y a deux aimants (30).

8. Rotor de machine électrique tournante selon une des revendications précédentes, **caractérisé en ce que** la pièce magnétique (31) a un profil en forme de T.

9. Rotor de machine électrique tournante selon une des revendications 1 à 7, **caractérisé en ce que** la pièce magnétique (31) a un profil en forme de U.

10. Rotor de machine électrique tournante selon une des revendications 1 à 7, **caractérisé en ce que** la pièce magnétique (31) a un profil en forme de S.

11. Rotor de machine électrique tournante selon une des revendications 1 à 7, **caractérisé en ce que** la pièce magnétique (31) a un profil en forme de π.

12. Rotor de machine électrique tournante selon une des revendications 1 à 7, **caractérisé en ce que** la pièce magnétique (31) a un profil en forme de H.

13. Rotor de machine électrique tournante selon une des revendications 1 à 8, **caractérisé en ce que** la pièce magnétique (31) est réalisé à partir d'une tôle pliée en accordéon.

14. Rotor de machine électrique tournante selon une des revendications précédentes, **caractérisé en ce que** la pièce magnétique (31) présente des perçages latéraux (319).

15. Rotor de machine électrique tournante selon une des revendications 9, 12 ou 13, **caractérisé en ce que** la surface supérieure (314, 315a, 316) de l'ensemble magnétique (3) est striée.

16. Machine electrique tournante comprenant un rotor selon l'une quelconque des revendications précédentes.

## Patentansprüche

1. Rotor (1) einer elektrischen Rotationsmaschine, umfassend zwei Polräder (2), die eine Reihe von axialen Greifern (20) von global trapezförmiger Form umfassen, die sich axial vom äußeren radialen Endrand des Polrades (2a) in Richtung des anderen Polrades (2b) erstrecken, so dass jeder Greifer (20a, 20b) eines Polrades (2a, 2b) in dem Raum angeordnet ist, der zwischen zwei aufeinanderfolgenden Greifern (20a, 20b) des anderen Polrades (2b, 2a) vorhanden ist, dass mindestens ein Zwischenpolraum (22) eine magnetische Einheit (3) umfasst, und dass mindestens eine der Einheiten (3) aus mindestens einem Magneten (30) zusammengesetzt ist, wobei die Einheit in einer Rille (21) aufgenommen ist, die in jeder der Seitenflächen gegenüber von zwei aneinandergrenzenden Greifern (20a, 20b) verwirklicht ist, und **dadurch gekennzeichnet, dass** die Einheit ferner aus mindestens einem Teil (31) aus einem magnetischen Material besteht.

2. Rotor einer elektrischen Rotationsmaschine nach Anspruch 1, **dadurch gekennzeichnet, dass** der Magnet (30) eine Breite zwischen 18- und 22-mal die Abmessung des Luftspalts hat.

3. Rotor einer elektrischen Rotationsmaschine nach einem der vorhergehenden Ansprüche, **dadurch gekennzeichnet, dass** das Material des magnetischen Teils (31) Stahl ist.

4. Rotor einer elektrischen Rotationsmaschine nach einem der vorhergehenden Ansprüche, **dadurch gekennzeichnet, dass** der Magnet (30) aus seltenen Erden ist.

5. Rotor einer elektrischen Rotationsmaschine nach einem der Ansprüche 1 bis 5, **dadurch gekennzeichnet, dass** der Magnet (30) in der Mitte von zwei Greifern (20a, 20b) angeordnet ist.

6. Rotor einer elektrischen Rotationsmaschine nach einem der vorhergehenden Ansprüche, **dadurch gekennzeichnet, dass** der Magnet (30) an einem der Greifer (20a, 20b) angeordnet ist.

7. Rotor einer elektrischen Rotationsmaschine nach einem der vorhergehenden Ansprüche, **dadurch gekennzeichnet, dass** zwei Magneten (30) vorhanden sind.

8. Rotor einer elektrischen Rotationsmaschine nach einem der vorhergehenden Ansprüche, **dadurch gekennzeichnet, dass** der magnetische Teil (31) ein Profil in Form eines T hat.

9. Rotor einer elektrischen Rotationsmaschine nach einem der Ansprüche 1 bis 7, **dadurch gekennzeichnet, dass** der magnetische Teil (31) ein Profil in Form eines U hat.

10. Rotor einer elektrischen Rotationsmaschine nach einem der Ansprüche 1 bis 7, **dadurch gekennzeichnet, dass** der magnetische Teil (31) ein Profil in Form eines S hat.

11. Rotor einer elektrischen Rotationsmaschine nach einem der Ansprüche 1 bis 7, **dadurch gekennzeichnet, dass** der magnetische Teil (31) ein Profil in Form eines n hat.

12. Rotor einer elektrischen Rotationsmaschine nach einem der Ansprüche 1 bis 7, **dadurch gekennzeichnet, dass** der magnetische Teil (31) ein Profil in Form eines H hat.

13. Rotor einer elektrischen Rotationsmaschine nach einem der Ansprüche 1 bis 8, **dadurch gekennzeichnet, dass** der magnetische Teil (31) aus einem akkordeonartig gefalzten Blech hergestellt ist.

14. Rotor einer elektrischen Rotationsmaschine nach einem der vorhergehenden Ansprüche, **dadurch gekennzeichnet, dass** der magnetische Teil (31) seitliche Bohrungen (319) aufweist.

15. Rotor einer elektrischen Rotationsmaschine nach einem der Ansprüche 9, 12 oder 13, **dadurch gekennzeichnet, dass** die Oberfläche (314, 315a, 316) der magnetischen Einheit (3) geriefelt ist.

16. Elektrische Rotationsmaschine, umfassend einen Rotor nach einem der vorhergehenden Ansprüche.

## Claims

1. Rotor (1) of a rotary electrical machine which comprises two pole wheels (2) comprising a series of axial claws (20) of trapezoidal overall shape which extend axially from the external radial end edge of the said pole wheel (2a) towards the other pole wheel (2b) in such a way that each claw (20a, 20b) of one pole wheel (2a, 2b) is situated in the space there is between two consecutive claws (20a, 20b) of the other pole wheel (2a, 2b), that at least one inter-pole space (22) comprises a magnetic assembly (3), and that at least one of the said assemblies (3) is made up of at least one magnet (30), the said assembly being held in a groove (21) made in each of the mutually-facing lateral faces of two adjacent claws (20a, 20b) and **characterized in that** the said assembly is further made up of at least one piece (31) made of a magnetic material.

2. Rotor of a rotary electrical machine according to Claim 1, **characterized in that** the magnet (30) has a width of between 18 and 22 times the dimension of the air gap.

3. Rotor of a rotary electrical machine according to one of the preceding claims, **characterized in that** the material of which the magnetic piece (31) is made is steel.

4. Rotor of a rotary electrical machine according to one of the preceding claims, **characterized in that** the magnet (30) is made of a rare earth material.

5. Rotor of a rotary electrical machine according to one of Claims 1 to 5, **characterized in that** the magnet (30) is placed in the middle of two claws (20a, 20b).

6. Rotor of a rotary electrical machine according to one of the preceding claims, **characterized in that** the magnet (30) is placed against one of the claws (20a, 20b).

7. Rotor of a rotary electrical machine according to one of the preceding claims, **characterized in that** there are two magnets (30).

8. Rotor of a rotary electrical machine according to one of the preceding claims, **characterized in that** the magnetic piece (31) has a T-shaped profile.

9. Rotor of a rotary electrical machine according to one of Claims 1 to 7, **characterized in that** the magnetic piece (31) has a U-shaped profile.

10. Rotor of a rotary electrical machine according to one of Claims 1 to 7, **characterized in that** the magnetic piece (31) has an S-shaped profile.

11. Rotor of a rotary electrical machine according to one of Claims 1 to 7, **characterized in that** the magnetic piece (31) has a π-shaped profile.

12. Rotor of a rotary electrical machine according to one of Claims 1 to 7, **characterized in that** the magnetic piece (31) has an H-shaped profile.

13. Rotor of a rotary electrical machine according to one of Claims 1 to 8, **characterized in that** the magnetic piece (31) is made from concertina-folded sheet metal.

14. Rotor of a rotary electrical machine according to one of the preceding claims, **characterized in that** the magnetic piece (31) has lateral piercings (319).

15. Rotor of a rotary electrical machine according to one of Claims 9, 12 or 13, **characterized in that** the top surface (314, 315a, 316) of the magnetic assembly (3) is striated.

16. Rotary electrical machine comprising a rotor according to any one of the preceding claims.
